# EUROPEAN PATENT SPECIFICATION

(11) **EP 2 305 549 B1**
(45) Date of publication and mention of the grant of the patent: **14.03.2012**
(21) Application number: 10180983.8
(22) Date of filing: 28.09.2010
(51) Int. Cl.: B62K 19/46, B62J 9/00

(54) **Utility box for saddle vehicle**
Aufbewahrungskasten für Sattelfahrzeug
Boîte utilitaire pour véhicule à selle

(30) Priority: 30.09.2009 JP 2009228203
(43) Date of publication of application: 06.04.2011
(73) Proprietor: Honda Motor Co., Ltd., Tokyo 107-8556 (JP)
(72) Inventor: Inoue, Yoshihiro, Saitama 351-0193 (JP); Misaki, Kenichi, Saitama 351-0193 (JP); Kawamura, Ippei, Saitama 351-0193 (JP)
(74) Representative: Beder, Jens

(56) References cited:
- EP-A1- 0 255 254
- JP-U- H0 242 889
- US-A1- 2002 096 377
- US-A1- 2010 077 807

## Description

This invention relates to a structure of a utility box, in a saddle vehicle having a fuel tank, which is an accommodation section provided on the fuel tank for accommodating various articles such as documents and small articles. EP-A-0 255 254 shows a structure of a utility box according to the preamble of claim 1.

As a prior art, a configuration is disclosed wherein an accommodation box open upwardly and a lid member for opening and closing the accommodation box are provided on a main frame extending rearwardly from a head pipe and the lid member is connected at a front end portion thereof for pivotal motion in upward and downward directions to a front portion of the main frame by a hinge while it is engaged at a rear portion thereof with a rear portion of the accommodation box by an engaging member (for example, Japanese Utility Model Laid-Open No. Hei 2-42889).

Meanwhile, as another prior art, a configuration is disclosed wherein an engine is disposed below a main frame extending rearwardly from a head pipe and a receiving plate is provided above a crankcase of the engine while an accommodation cover for opening and closing the receiving plate is provided on the main frame and is supported for pivotal motion in upward and downward directions at a front portion of the main frame (for example, published Japanese Patent JP 3014779).

Since the accommodation cover in the prior arts is opened by an operation of one stage, it sometimes opens by an inadvertent touch therewith or the like. However, where the accommodation cover is provided on a fuel tank positioned forwardly of the driver, preferably it has higher reliability without such inadvertent opening. Therefore, it is an object of the present invention to implement such a demand as just described.

In order to solve the subject described above, according to the invention as set forth in claim 1, a structure of a utility box for a saddle vehicle which is provided on a saddle vehicle wherein a fuel tank is supported on a main frame extending rearwardly from a head pipe and an engine is disposed below the main frame, is characterized in that
a recessed portion which is recessed downwardly is provided on an upper face of the fuel tank and the utility box is disposed in the recessed portion, that the utility box includes a body case open upwardly for accommodating an article therein, a lid attached for upward pivotal motion for opening and closing the opening of the body case, and opening and closing blocking means for blocking the opening and closing of the lid, that the opening and closing blocking means includes a lever pivoting mechanism for pivoting a lever, which is attached for pivotal motion to the lid and serves as a griping portion when the lid is to be opened, upwardly and downwardly, and an engaging mechanism for engaging the lid with the body case and canceling the engagement when the lid is pulled up by a predetermined pulling up load, and that
the opening and closing blocking means is operated at two stages such that, as the first stage operation, the lever is pushed to pivot the lever to be erected uprightly through the lever pivoting mechanism such that the lever can be gripped, and
as the second stage operation, the lever erected uprightly is gripped and pulled up by a predetermined pulling up load to cancel the engagement of the engaging mechanism to permit the lid to be opened.

According to the invention as set forth in claim 2, the structure of a utility box for a saddle vehicle according to claim 1 is characterized in that the lever pivoting mechanism includes spring means for elastically biasing the lever in the erecting direction, and the popup mechanism pivots the lever uprightly by the spring means by pushing down the lever by a predetermined amount so as to popup the lever.

According to the invention as set forth in claim 3, the structure of a utility box for a saddle vehicle according to claim 2 is characterized in that the lever pivoting mechanism includes a plurality of blocking portions for permitting erecting pivotal motion of the lever by pushing down the lever by the predetermined amount.

According to the invention as set forth in claim 4, the structure of a utility box for a saddle vehicle according to any one of claims 1 to 3 is characterized in that a gap in the form of a groove of an inverted V shape directed uprightly at a joining portion between the lid and a member on the fuel tank side which surrounds the lid when the lid is closed is provided and a rib which projects downwardly is provided on a lower face of the lid along the joining portion, and another rib which projects upwardly from the body case side is disposed in such a manner as to overlap with the rib with a gap left therebetween such that a labyrinth structure is formed from the ribs.

According to the invention as set forth in claim 5, the structure of a utility box for a saddle vehicle according to claim 4 is characterized in that, as the rib which projects from the lid side or the body case side, a plurality of ribs are provided on the inner and outer sides, and the inner and outer ribs have different heights from each other such that the outer rib adjacent the joining portion has a greater height.

According to the invention of claim 1, by pushing the lever by an operation of the first stage to uprightly pivot the lever by means of the lever pivoting mechanism so as to be capable of being grasped and then gripping, by an operation of the second stage, the lever erected uprightly and pulling up the lever by a predetermined pulling up load, the engagement of the engaging mechanism can be canceled to open the lid. Therefore, since the lid cannot be opened with certainty without following the determined procedure by two-stage operations, even if the utility box is provided at a place at which a driver can touch readily with the utility box by providing the utility box on the fuel tank, it is possible to prevent the lid from being opened by an inadvertent touch or the like. Therefore, the reliability regarding opening and closing of the lid can be raised.

According to the invention of claim 2, since the lever pivoting mechanism is formed from a popup mechanism such that the lever is pushed down by a predetermined amount to pop up the lever, unless the lever is popped up, the lever remains in a lying down state and does not rise from the surface of the lid. Therefore, the possibility that the lever may be gripped to open the lid inadvertently is eliminated. In addition, in order to pop up the lever, it is necessary to push down the lever by a predetermined amount, and inadvertent popup can be prevented likewise. Further, if the lever is popped up, then it is possible to grip the lever and pull up the lever by more than the predetermined pulling up load to open the lid. Besides, when the pulling up load is less than the predetermined amount, the engagement of the engaging mechanism cannot be canceled, and therefore, inadvertent opening of the lid can be prevented likewise.

According to the invention of claim 3, since a plurality of blocking portions for permitting upright pivotal motion of the lever are provided, inadvertent popup can be blocked with a higher degree of certainty, and the reliability in regard to opening and closing of the lid can be enhanced further.

According to the invention of claim 4, since the gap in the form of a groove of an inverted V shape directed uprightly is provided at the joining portion between the lid and the member around the lid when the lid is closed is provided, even if the gap at the joining portion is dispersed by seal reactive force, the gap can be made less liable to be observed from the outside. Besides, even if water enters through the joining portion, since the labyrinth structure is formed from the overlap of the ribs projecting from the lid side and the body case side, the labyrinth structure can make water less likely to invade thereby to enhance the waterproof of the accommodation section of the body case.

According to the invention of claim 5, as the rib which projects from the lid side or the body case side, the plural ribs are provided on the inner and outer sides, and the inner and outer ribs have different heights from each other such that the outer rib adjacent the joining portion has a greater height. Therefore, invasion of water can be blocked by the joining portion on the more outer side, and the waterproof performance can be enhanced further.

FIG. 1 shows side elevational views of a fuel tank according to an embodiment.
FIG. 2 shows side elevational views of a tank pocket.
FIG. 3 is a perspective view of the tank pocket in a state wherein a lid therefor is open.
FIG. 4 is an exploded view of the tank pocket.
FIG. 5 is a perspective view of a body case as viewed from the upper side.
FIG. 6 is a perspective view of the body case as viewed from the lower side.
FIG. 7 is a sectional view of essential part taken along line 7-7 of FIG. 6.
FIG. 8 is a sectional view of essential part taken along line 8-8 of FIG. 6.
FIG. 9 is a side elevational view partly in section of the tank pocket.
FIG. 10 is a sectional view taken along line 10-10 of FIG. 9.
FIG. 11 is a sectional view taken along line 11-11 of FIG. 9.
FIG. 12 is an exploded sectional view of a popup mechanism and a latch mechanism section.
FIG. 13 is views showing details of a popup lever.
FIG. 14 is a sectional view of a popup stay.
FIG. 15 is views illustrating operation of the popup mechanism.
FIG. 16 is a side elevational view of a motorcycle to which the present embodiment is applied.

In the following, a mode of the present invention is described in connection with an embodiment applied to a fuel tank provided on such a saddle vehicle as a motorcycle with reference to the accompanying drawings. It is to be noted that descriptions of directions such as forward and backward, leftward and rightward, and upward and downward directions are given with reference to the vehicle body of the saddle vehicle. Further, an arrow mark F in the figures indicates the forward direction of the vehicle body, and another arrow mark U indicates the upward direction of the vehicle body. Further, reference character R denotes the right side of the vehicle body, L the left side of the vehicle body, and RR the rear side. It is to be noted that the leftward and rightward direction of the vehicle body is suitably referred to as vehicle widthwise direction or widthwise direction.

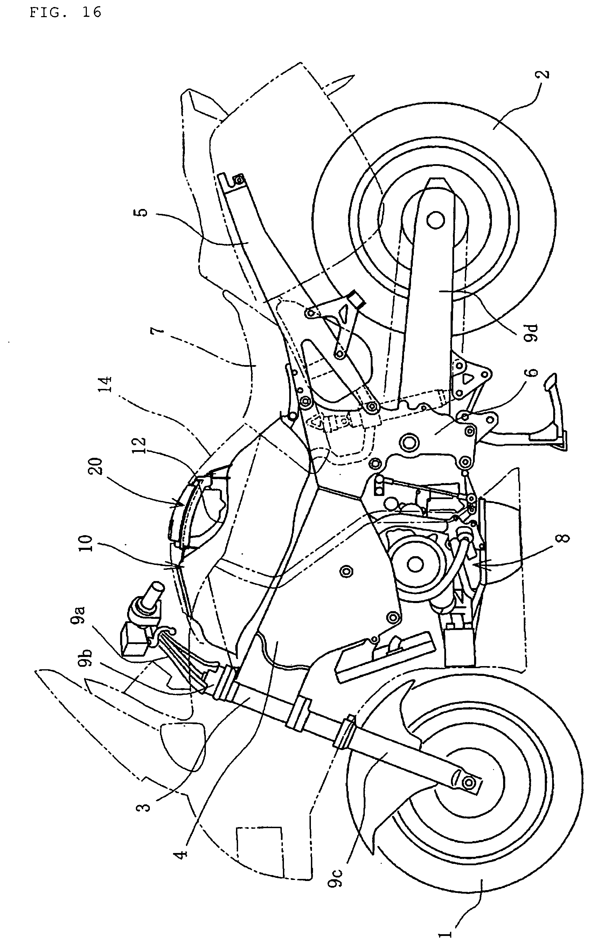

FIG. 16 is a side elevational view of a motorcycle to which the present invention is applied. This motorcycle includes a vehicle body frame which supports a front wheel 1 and a rear wheel 2 on the front and the rear thereof. This vehicle body frame includes a head pipe 3 provided at a front end portion of the vehicle body frame, a main frame 4 extending rearwardly from the head type, and a seat rail 5 extending rearwardly and a pivot frame 6 extending downwardly continuously from the main frame 4. A fuel tank 10 is supported on the main frame 4, and a seat 7 is disposed continuously rearwardly of the fuel tank 10 and is supported on the seat rail 5. An engine 8 is supported below the main frame 4.
Reference character 9a denotes a handle bar, which connects to an upper end of a steering shaft 9b supported for rotation on the head pipe 3, and the steering shaft 9b is connected at a lower end thereof to a front fork 9c which supports the front wheel 1. Reference character 9d denotes a rear fork for supporting the rear wheel 2. It is to be noted that such main frames 4 may be provided in a left and right pair or a single main frame 4 may be provided along the center of the vehicle body.
The fuel tank 10 is placed on and supported by the main frames 4 and is positioned forwardly of a driver (not shown) seated on the seat 7 disposed rearwardly of the fuel tank 10 such that left and right rear side faces thereof are gripped by the knees of the driver. Further, a tank pocket 20 hereinafter described is provided on the fuel tank 10 such that the driver can open and close a lid and place an article into and out of the tank pocket 20 while it is seated.

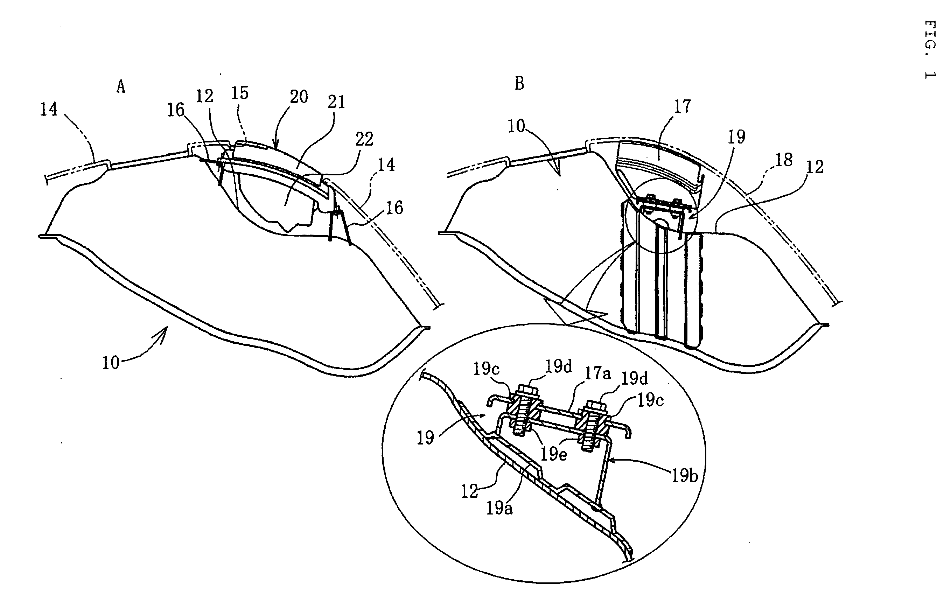

FIG. 1 is a side elevational view of the fuel tank carried on the motorcycle described above. This fuel tank 10 is used commonly for both of an airbag specification including an airbag and an airbagless specification which does not include an airbag. A of FIG. 1 shows an airbagless specification which includes a tank pocket 20 in place of an airbag. The tank pocket 20 is an example of the utility box for a saddle vehicle of the present invention. Reference character B shows the airbag specification which includes an airbag.

Referring to FIG. 1, a downwardly concave recessed portion 12 is provided at an upper portion of the fuel tank 10, and the recessed portion 12 is covered from above with an airbagless specification outer cover 14. An upper face of the airbagless specification outer cover 14 is formed as a rearwardly inclined face which is inclined rearwardly, and a tank pocket opening 15 is formed in the proximity of a top portion of the airbagless specification outer cover 14. Here, a lid 21 of the tank pocket 20 accommodated in the recessed portion 12 in advance faces for opening and closing movement in the tank pocket opening 15. The tank pocket 20 is supported on the fuel tank 10 through a tank pocket stay 16 attached to the fuel tank 10 by welding or the like in advance by attaching the tank pocket 20 to the tank pocket stay 16 by fastening by means of a bolt or the like.

The tank pocket 20 is a utility box which can accommodate documents, various small articles and so forth and includes a box-shaped body case 22 open upwardly, and a lid 21 for opening and closing the opening of the body case 22. The driver seated on the seat positioned rearwardly of the fuel tank 10 can extend its hand at any time to open or close the lid 21 and place an article into or take it out from the tank pocket 20.

It is to be noted that an airbag module 17 can be accommodated in the accommodation section of the tank pocket 20 in place of the tank pocket 20 as shown in B of the figure. In particular, by setting the size of the recessed portion 12 such that the airbag module 17 can be disposed in the recessed portion 12, the fuel tank 10 can be used commonly for the airbag specification shown in B of the figure and the airbagless specification shown in A of the figure. In the case of the airbagless specification, as shown in A of the figure, the tank pocket 20 is disposed in place of the air bag module 17. In the case of the airbag specification, separately from the airbagless specification outer cover 14 wherein the tank pocket opening 15 is formed, an airbag specification outer cover 18 having such an opening as just described is used. On the airbag specification outer cover 18, a weak portion for being broken upon expansion of an airbag is provided at a suitable location in advance.

The airbag module 17 is supported in the recessed portion 12 on the fuel tank 10 by an airbag stay 19. As shown also in an enlarged view in the figure, the airbag stay 19 includes a first stay 19a in the form of a band plate disposed and welded so as to extend along the opposite side faces from an upper face of the fuel tank 10, and a second stay 19b welded to an upper face of the first stay 19a and having a substantially channel shape as viewed in side elevation. The airbag module 17 is attached at a bottom portion 17a thereof to the second stay 19b for damping by bolts 19d through damping rubber members 19c. Reference character 19e denotes a weld nut.

Although the airbagless specification outer cover 14 and the airbag specification outer cover 18 cannot be used commonly, the airbag stay 19 can sometimes be utilized as the tank pocket stay 16. In this instance, a stay having a shape varied in accordance with the attaching portion of the tank pocket is used as the second stay 19b. It is to be noted that the first stay 19a is for absorbing a high load upon expansion of the airbag, and therefore, it is possible to omit this.

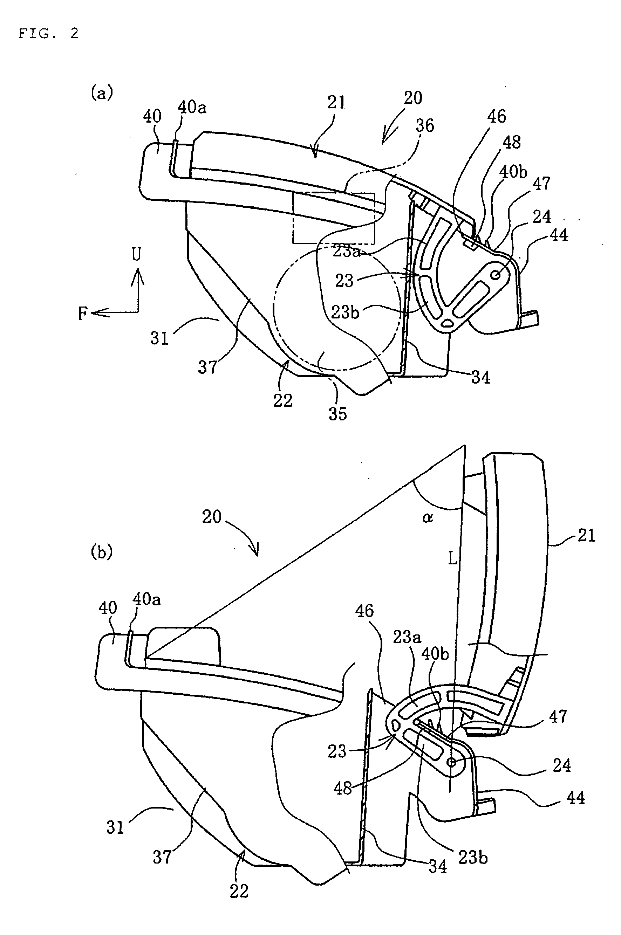

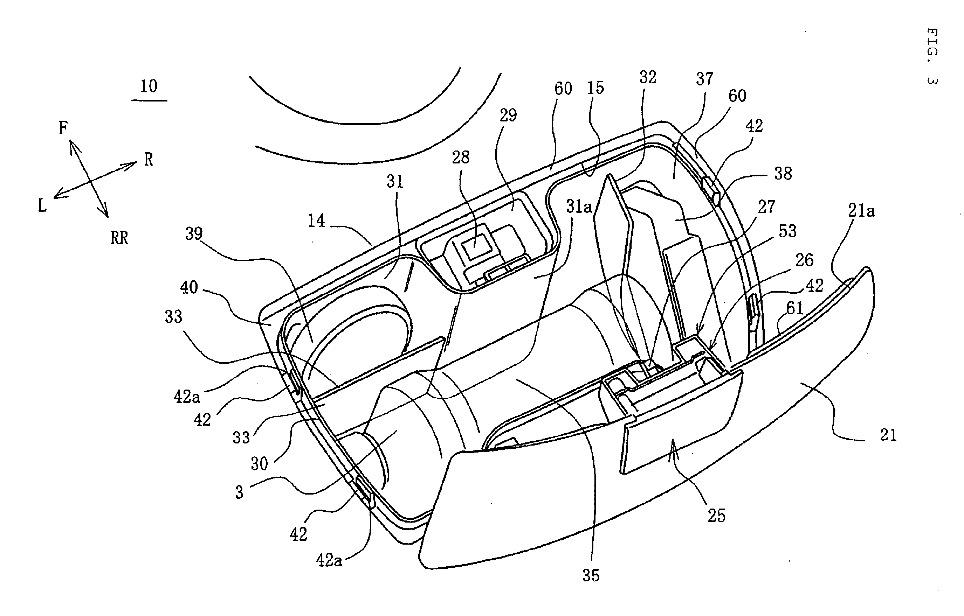

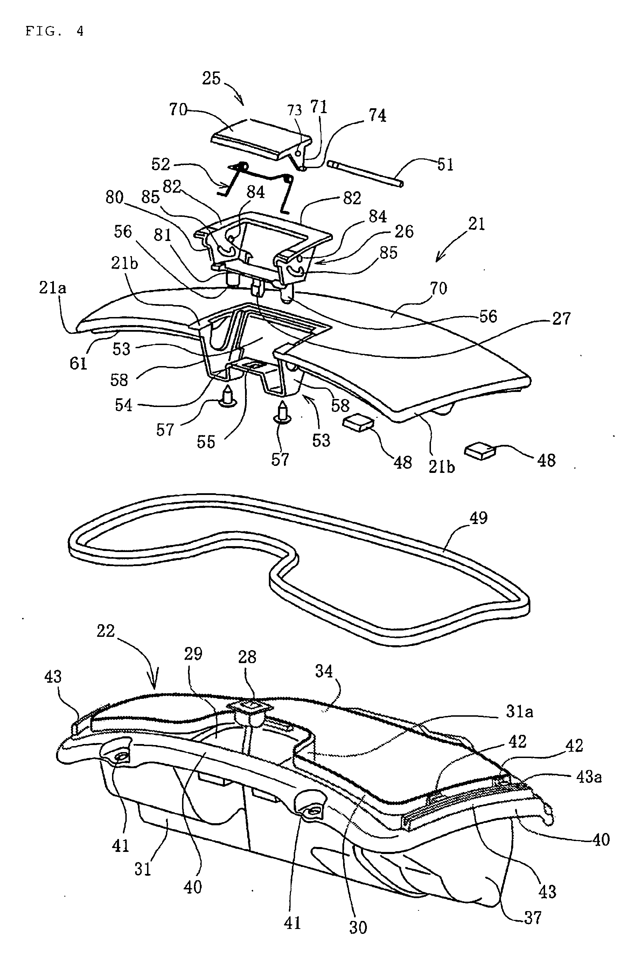

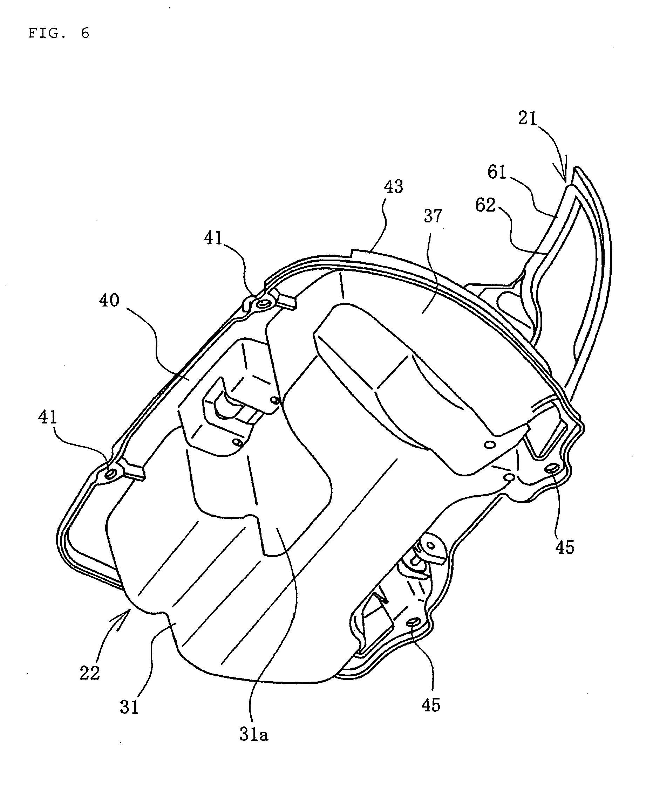

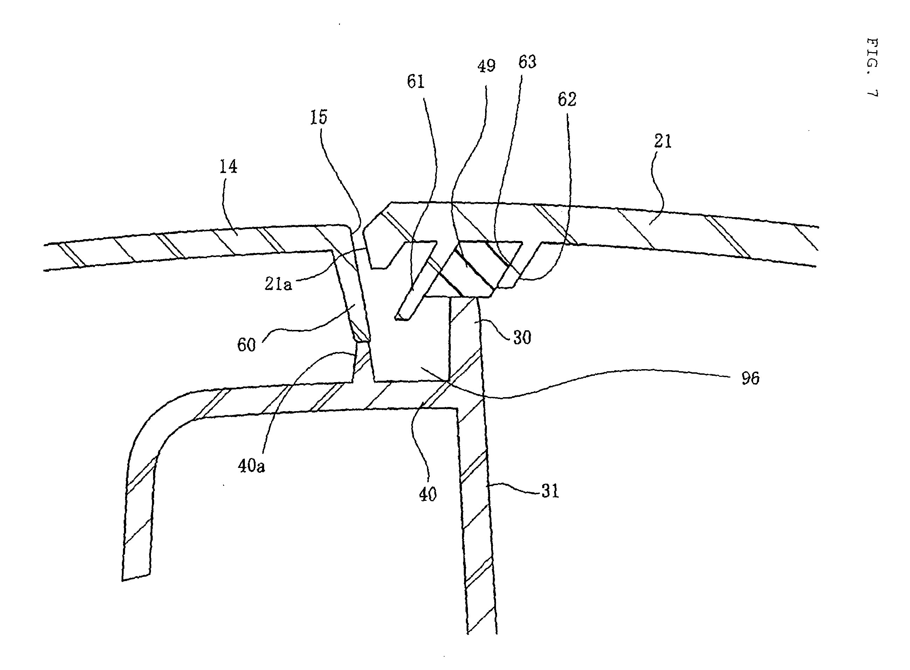

FIG. 2 is side elevational views of the tank pocket, and (a) shows the pocket in a state wherein the lid 21 is closed and (b) shows the pocket in another state wherein the lid 21 is open. FIG. 3 is a perspective view of the tank pocket 20 in a state wherein it is provided on the fuel tank 10 as viewed from obliquely upwardly and rearwardly in the state wherein the lid 21 is open. FIG. 4 is an exploded view of the tank pocket. FIG. 6 is a perspective view of the body case 22, which configures the accommodation section of the tank pocket, as viewed from the upper side, and FIG. 7 is a perspective view of the body case 22 as viewed from the lower side.

As shown in FIG. 3 and (b) of FIG. 2, rear portions of the lid 21 and the body case 22 are connected to each other by a hinge 23 such that the front side is opened and closed around a hinge axis 24. If the lid 21 is formed otherwise such that the rear side is opened, then since the airbagless specification outer cover 14 has a rearwardly inclined face, contents are liable to drop and the accommodation capacity decreases. However, where the front side is opened, such possibility is decreased to achieve a large capacity.

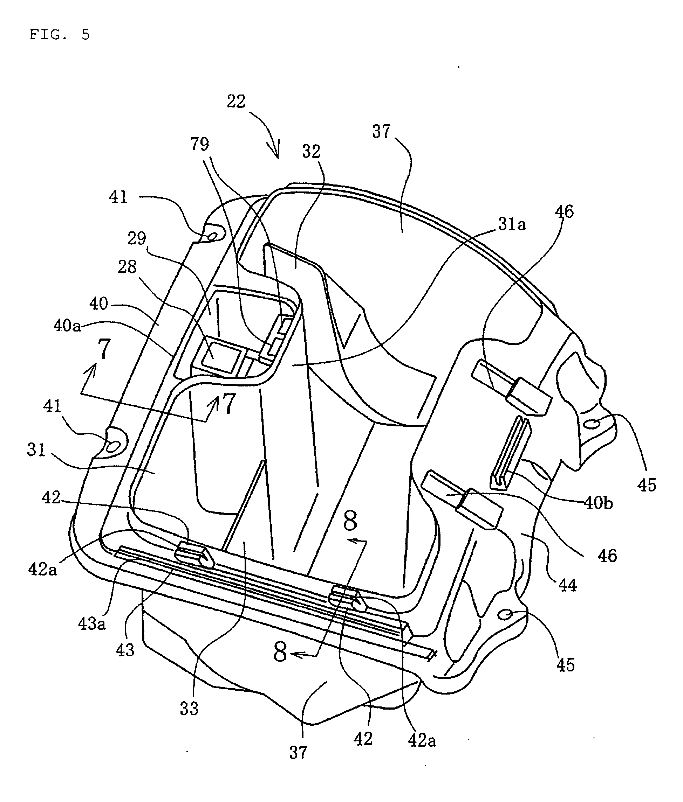

The hinge 23 is formed from an arm member having a curved portion 23a and a linear portion 23b and bent in a substantially V shape, and the curved portion 23a is fixedly mounted at an end thereof to a lower face of a rear end of the lid 21. The linear portion 23b is attached at an end thereof for pivotal motion to a rear extension 44 which projects rearwardly from a rear portion of the body case 22 by the hinge axis 24. The curved portion 23a extends through a hinge hole 46 (FIG. 5) provided on an upper face of the rear extension 44. Part of the upper face of the rear extension 44 is formed as a stopper 47, and a cushion 48 is attached to a lower face of the stopper 47 such that, upon fully opening, the linear portion 23b is abutted with the stopper 47 through the cushion 48 to restrict the opening angle α at the fully open position of the lid 21 to approximately 80°.

At this fully open position, the lid 21 has a state proximate to a substantially vertical state of such a degree that a line L interconnecting a forwardmost projecting portion of the lid 21 and the hinge axis 24 opens a little greater than 90° so that the driver can readily confirm the contents in the body case 22 without looking into the body case 22.
The cushion 48 is made of sponge rubber and is an elastic member of a low rebound resilience thereby to prevent collision between resins and suppress such collision sound upon fully opening to improve the feel of a good material.

A transverse flange hereinafter described is provided at an upper portion of the body case 22. At the transverse flange, the body case 22 is attached to the tank pocket stay 16 by screwing, and the transverse flange is placed in an overlapping relationship in the upward and downward direction on the rear side of a peripheral portion of the tank pocket opening 15 of the airbagless specification outer cover 14. Further, as hereinafter described, a peripheral portion of the tank pocket opening 15 of the airbagless specification outer cover 14 is locked by the transverse flange. Although the upper face of the lid 21 in the closed state projects a little upwardly farther than the upper face of the airbagless specification outer cover 14, the upper faces continue generally smoothly and continuously such that the upper face of the lid 21 has little offset with respect to the airbagless specification outer cover 14.

As shown in FIG. 3, a popup lever 25 is provided at a front end portion of a central portion in the vehicle widthwise direction of the lid 21, and an engaging projection 27 provided on an popup stay 26 with which the popup lever 25 is integrated is removably engaged with a latch 28 provided at a front end portion of the body case 22. If the engaging projection 27 is engaged with the latch 28, then the lid 21 maintains the closed state. The engaging projection 27 and the latch 28 configure a latch mechanism, and engagement of the engaging projection 27 with the latch 28 can be canceled by picking (gripping) the popup lever 25 to pull the lid 21 upwardly by more than a predetermined pulling up load. This pulling up load can be set arbitrarily.

The popup lever 25 varies between a lying state wherein it is flush with the lid 21 and a popup state wherein an end thereof stands uprightly. If, when the popup lever 25 is in the popup state, the popup lever 25 is picked and pulled upwardly, then the engaging projection 27 cancels the engagement with the latch 28 and the lid 21 is opened. In particular, the lid 21 is opened by two-stage actions of popup operation and unlatching of the popup lever 25.

An upright flange 30 is provided in the form of a peripheral wall on the periphery of the opening of the body case 22, and an inner side space surrounded by the upright flange 30 serves as an accommodation space. Of the peripheral wall portion surrounding this accommodation space, a front wall 31 partially retreats rearwardly at a central portion in the vehicle widthwise direction of a front end portion thereof, and the latch 28 is provided at a bottom portion (hereinafter described) of a latch recessed portion 29 formed on the outer side forwardly of the retreating portion 31a.
The peripheral wall portion is formed from the front wall 31, a rear wall 34, and left and right side walls 37, and upper projections which are upper end portions of the wall portions serve as the upright flange 30.

The body case 22 is elongated transversely and has a sufficient depth, and the accommodation space is partitioned by the front wall 31 and partition walls 32 and 33. In a principal portion between the front wall 31 and the rear wall 34 (FIG. 4), a bottle 35 for drinking water of approximately 500 cc can be accommodated in a transversely directed state in the vehicle widthwise direction. Further, an article 36 (FIG. 2) can be suitably accommodated in an overlapping relationship on the drinking water bottle 35. The partition wall 32 is a vertical wall formed substantially in parallel to the side walls 37, and a portable telephone set 38 of a substantially parallelepiped is accommodated between the partition wall 32 and the side walls 37 such that the lengthwise direction thereof is directed in the forward and backward direction.

The partition wall 33 is a transverse wall formed substantially in parallel to the front wall 31 which projects forwardly sidewardly of the retreating portion 31a, and a substantially circular part 39 such as a coin purse or a portable ashtray can be accommodated between the partition wall 33 and the front wall 31 such that a circular plane thereof extends in parallel to the upward and downward direction and the vehicle widthwise direction. By partitioning the inside into a plurality portions in this manner, a plurality of articles can be accommodated in a well-arranged state.

As shown in FIG. 4, this tank pocket 20 includes a seal 49 provided between the lid 21 and the body case 22 to establish watertight sealing so that, when the lid 21 is closed, no water is admitted into the body case 22. The seal 49 has a ring shape similar to that of the upright flange 30 in the form of a peripheral wall and has a quadrangular cross section. The seal 49 is made of independent foamed rubber of a low rebound resilience (for example, that of a trade name "Eptsealer" by Nitto Denko is available) and is attached to the rear face of the lid 21 such that, when the lid 21 is closed, the end of the upright flange 30 is closely contacted liquid-tight therewith.
By using the seal of such a low rebound resilience as described above, the influence of the rebound force of the seal material upon a joining portion can be reduced. Further, by adoption of independent foamed rubber, water can be intercepted effectively so that it cannot pass through the material thickness of the seal 49.

A popup mechanism 50 for popping up the popup lever 25 is provided on the lid 21.
The popup mechanism 50 includes the popup lever 25, the popup stay 26, a shaft member 51 for attaching the popup lever 25 for pivotal motion to the popup stay 26, and a spring 52 wound around the shaft member 51 for pivotally biasing the popup lever 25 so that the front end side of the popup lever 25 opens upwardly. While the spring 52 in the present embodiment is formed from a torsion coil spring, it is possible to replace the torsion coil spring with a known suitable spring member. Details of the popup mechanism 50 are hereinafter described.

The popup stay 26 is fitted in a stay attaching recessed portion 53 formed at a central portion in the vehicle widthwise direction of a front end portion of the lid 21, and the engaging projection 27 projecting downwardly from a bottom portion of the popup stay 26 extends through an opening 55 formed at the center of a bottom portion 54 of the stay attaching recessed portion 53 and projects downwardly.

Further, attaching bosses 56 which project downwardly from the bottom portion of the popup stay 26 are placed on the bottom portion 54 and screws 57 are screwed from below into the attaching bosses 56 to integrate the popup stay 26 with the stay attaching recessed portion 53.
If the stay attaching recessed portion 53 is fitted into the latch recessed portion 29, then the engaging projection 27 projecting from the bottom portion 54 is locked by the latch 28 provided in the latch recessed portion 29 and the lid 21 is held in a closed state.

Now, the body case 22 is described in detail. As shown in FIGS. 5 and 6, a transverse flange 40 stretching in a horizontal direction is provided continuously from the front side to the opposite left and right sides of the periphery of the upright flange 30 on the upper face of the body case 22. This transverse flange 40 is a portion which overlaps with the tank pocket stay 16, and attaching portions 41 are provided on the left and right of the front portion and fastened to the tank pocket stay 16 by means of screws (not shown) from above. It is to be noted that attaching portion screws for being placed on and screwed to the tank pocket stay 16 are provided also on the rear extension 44 on the rear side.

On the left and right transverse flanges 40, substantially U-shaped insertion fixing pieces 42 are provided on the outer side of the upright flange 30 in a forwardly and backwardly spaced relationship from each other, and a fixing rail 43 is provided on the outer side of the insertion fixing pieces 42 such that it extends substantially in parallel to the upright flange 30. Grooves cut in from above are formed on the insertion fixing pieces 42 and the fixing rail 43, and when the lid 21 is closed, a rib provided on the lid 21 side is inserted into the insertion fixing pieces 42 while an edge portion of the tank pocket opening 15 (FIG. 3) of the airbagless specification outer cover 14 is inserted into the fixing rail 43.

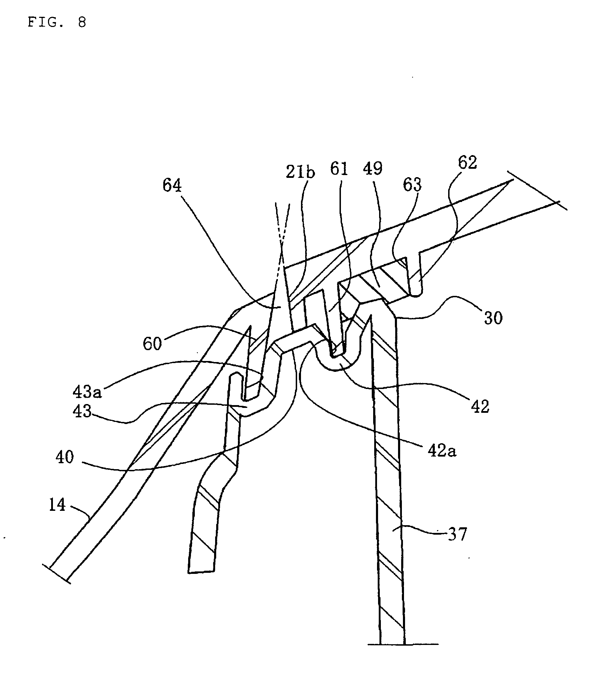

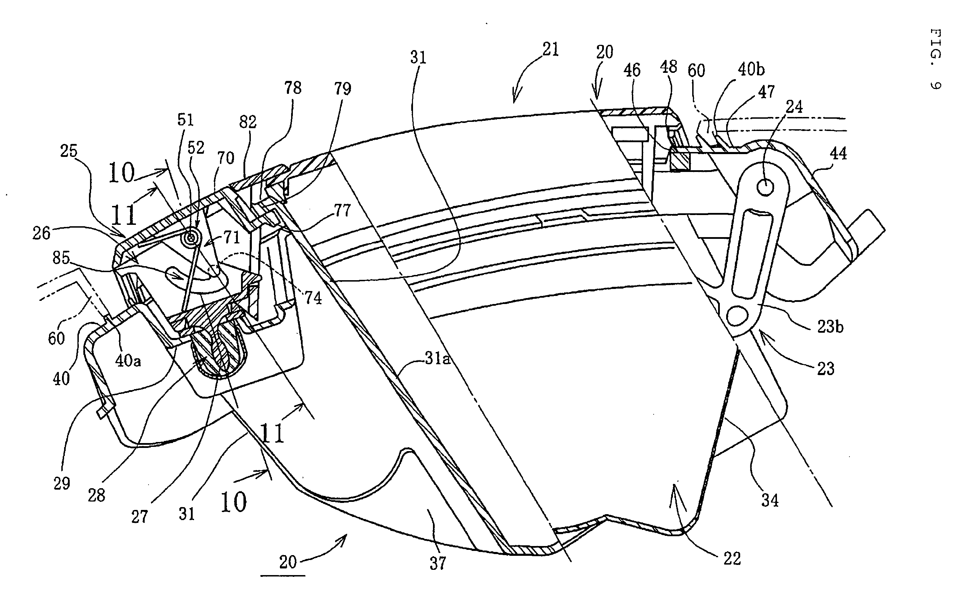

FIG. 7 is a sectional view taken along line 7-7 of FIG. 5 and showing a joining portion between the airbagless specification outer cover 14 and the lid 21. In this figure, an edge portion 60 which surrounds the tank pocket opening 15 (FIG. 3) of the airbagless specification outer cover 14 is formed as an inclined face which is inclined in a direction toward the center of the tank pocket opening 15, and contacts at an end thereof with a rib 40a formed in a projecting manner on an upper face of the transverse flange 40. It is to be noted that the edge portion 60 is fitted at the opposite side portions thereof in a groove 43a of the fixing rail 43 (refer to FIG. 8) and is fitted at a rear portion thereof with a fixing rail 40b formed on the upper face of the rear extension 44 and having a similar structure to that of the fixing rail 43 (refer to FIG. 9).

A front end portion 21a of the lid 21 provides an inclined face extending in parallel to the edge portion 60, and some gap is formed between the front end portion 21a and the edge portion 60. On the rear face of a front portion of the lid 21, a pair of front and rear ribs 61 and 62 are formed in a projecting manner in a reversely inclined relationship to that of the edge portion 60, that is, in a manner wherein lower portions thereof come close to the edge portion 60. The ribs 61 and 62 extend in parallel to each other and continuously surround the tank pocket opening 15 in a corresponding relationship to the upright flange 30. A peripheral groove 63 is formed between the ribs 61 and 62 disposed in an inwardly and outwardly spaced relationship from each other, and the seal 49 is fitted in the peripheral groove 63 while an end of the upright flange 30 contacts closely with a lower face of the seal 49.
From between the rib 61 on the outer side and the rib 62 on the inner side which are positioned close to the joining portion, the height of the rib 61 is greater (in other words, the rib on the lid side has a greater downwardly projecting amount).

Further, the upright flange 30 enters between the inner and outer ribs 61 and 62, and the upright flange 30 and the ribs 61 and 62 overlap inwardly and outwardly with each other, so that the gap between the ribs forms a labyrinth structure.
Therefore, even if water enters through the joining portion, the labyrinth structure makes water less likely to enter the inner side, and further, the seal 49 prevents invasion of water with a higher degree of accuracy. Further, since the inner and outer ribs 61 and 62 have different heights from each other and the outer side rib 61 on the joining portion side has a greater height, the rib 61 on the joining portion side on the outer side can prevent invasion of water with a higher efficiency. Thus, the waterproof performance can be further raised.
It is to be noted that it is possible to erect the inner and outer ribs 61 and 62 upwardly from the body case 22 side and provide a rib like the upright flange 30 which enters between the ribs 61 and 62 on the lid 21 side. Further, the number of inner and outer ribs 61 and 62 is an arbitrary number if it is equal to or greater than 2.

FIG. 8 is a sectional view taken along line 8-8 of FIG. 5 and showing the joining portion between the airbagless specification outer cover 14 and the lid 21. Referring to this figure, the edge portion 60 of the airbagless specification outer cover 14 is inserted into the groove 43a of the fixing rail 43. The upright flange 30 which is an upper end portion of the side wall 37 is closely contacted with the seal 49 fitted in the peripheral groove 63 between the ribs 61 and 62.

It is to be noted that, at a side portion, different from the front end portion, the edge portion 60 is inclined reversely in such a manner that the lower side is open to the outer side, and further, the front end portion 21a of the lid 21 is inclined reversely with respect to the edge portion 60. Therefore, a gap 64 formed between the front end portion 21a and the edge portion 60 indicates a shape of an inverted V shape which increases downwardly. Where the gap 64 is formed as a groove of an inverted V shape in this manner, a sufficient sealing property is maintained even where a dispersion is caused with the joining by sealing repulsive force or the like.
Further, even if the gap of the joining portion is dispersed by the sealing repulsive force, it is possible to make the gap less liable to be observed from the outside.
It is to be noted that naturally the seal structure of FIGS. 7 and 8 can be applied as a seal structure for a different portion.

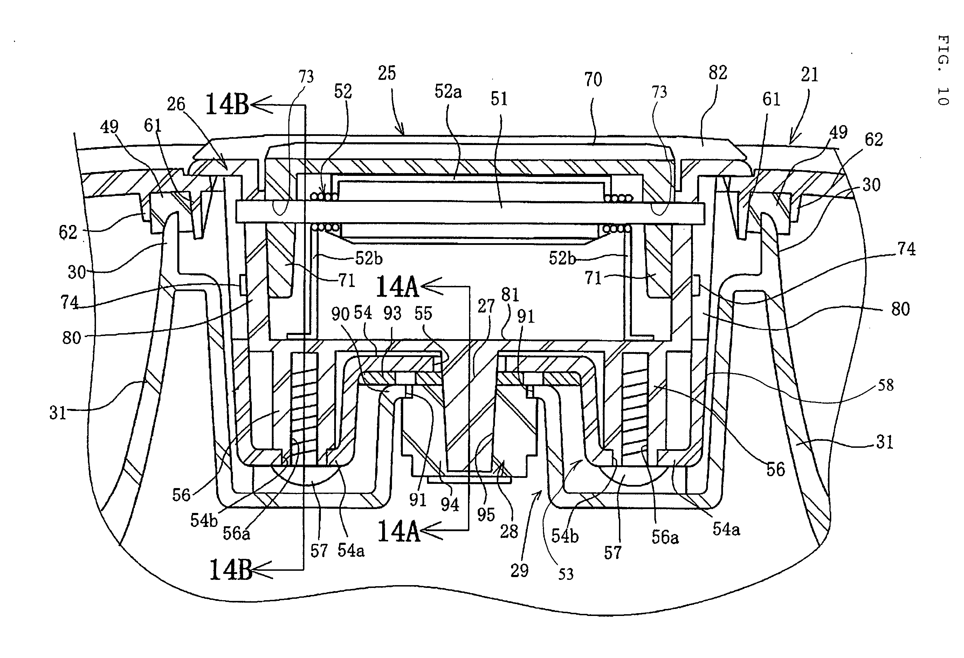

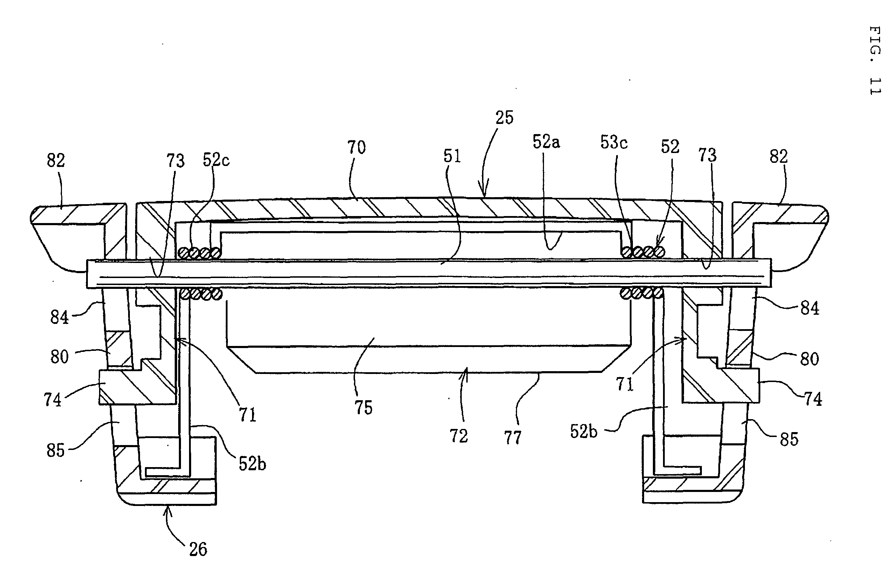

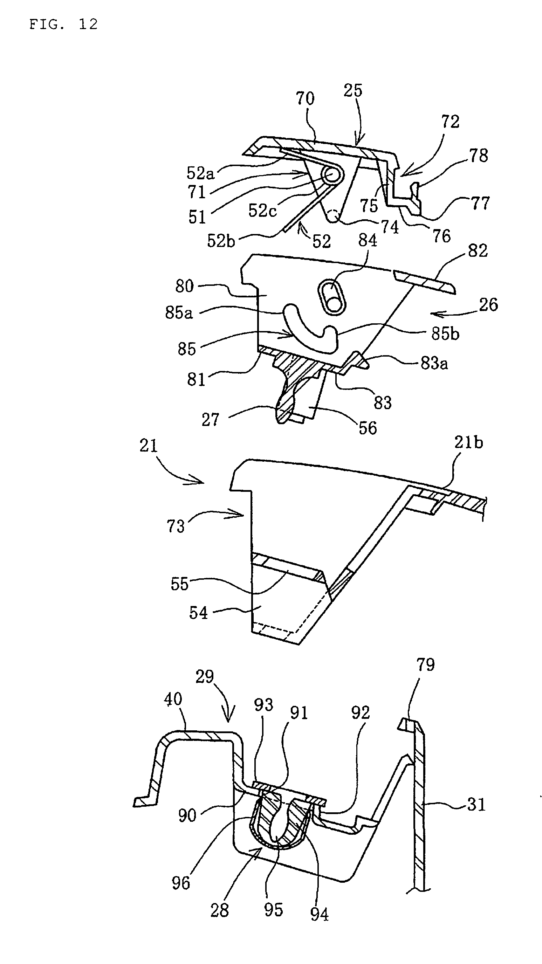

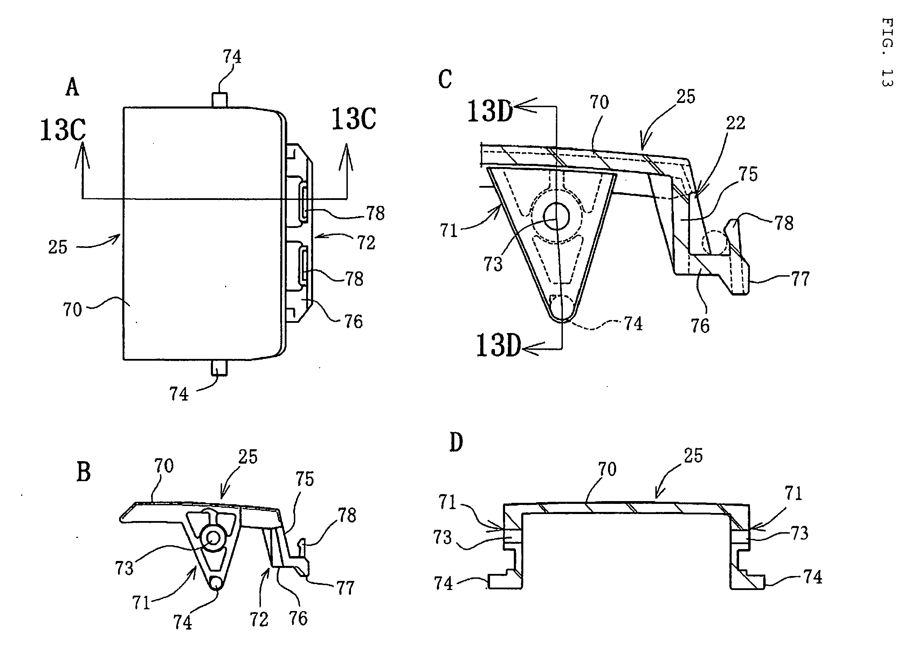

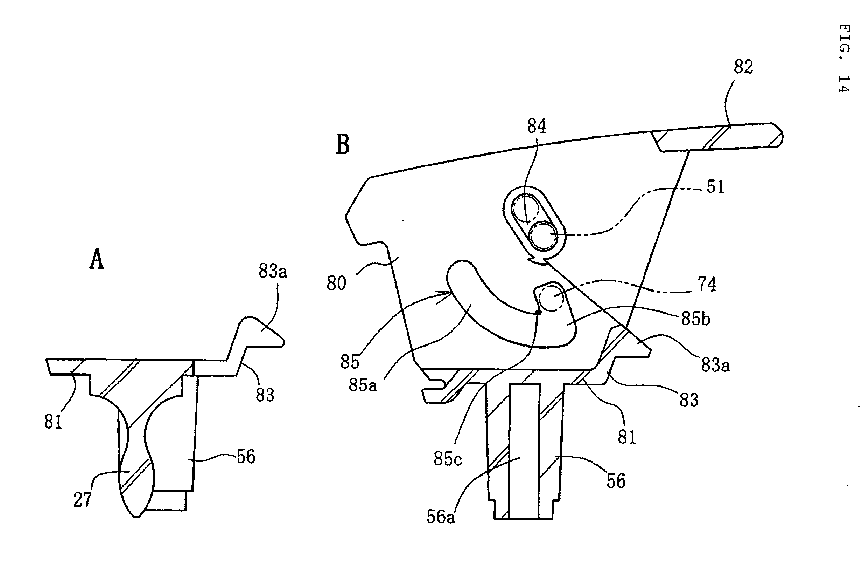

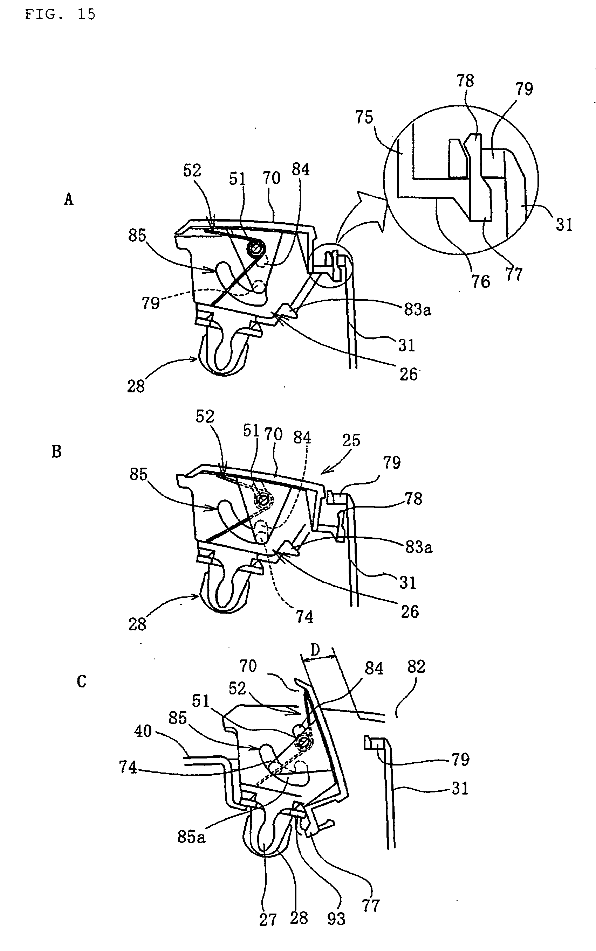

Now, the popup mechanism 50 is described in detail. FIG. 9 is a side elevational view showing a structure of the tank pocket 20, and front and rear portions are partly broken to show the inside. FIG. 10 is a sectional view taken along line 10-10 of FIG. 9, FIG. 11 is a sectional view taken along line 11-11 of FIG. 9, and FIG. 12 is an exploded sectional view showing the popup mechanism 50 and the latch mechanism section. FIG. 13 is a view showing details of the popup lever 25, FIG. 14 is an enlarged sectional view of the popup stay 26, and FIG. 15 is a view illustrating operation of the popup mechanism 50.

As shown in FIGS. 4, 9 and 10, the stay attaching recessed portion 53 includes a pair of left and right side walls 58 connected to each other by the bottom portion 54 and is open in the forward and backward directions and upwardly. The bottom portion 54 has an offset structure wherein it rises upwardly at a central portion thereof in the leftward and rightward direction while it is lower on the opposite left and right sides thereof. The opening 55 is formed at a high location of the center of the bottom portion 54, and the attaching bosses 56 are placed at a lower end thereof on the lower portions on the opposite left and right sides. A fitting hole for the screws 57 is provided at the lower end of each of the attaching bosses 56.

A of FIG. 13 is a plan view of the popup lever 25, B is a side elevational view, C is a sectional view taken along line 13C-13C, and D is a sectional view taken along line 13D-13D. The popup lever 25 has provided integrally thereon a knob 70 which is a knob part of a substantially rectangular shape as viewed in plan, a pair of left and right side walls 71 which extend downwardly from the left and right of the knob 70 and have an inverted triangular shape as viewed in side elevation, and an arm portion 72 provided at a rear end of the knob 70 and having a substantially L shape as viewed in side elevation.

A through-hole 73 for threading the shaft member 51 (FIG. 4) therethrough is provided at a central portion of each side wall 71 in the upward and downward direction, and a guide shaft 74 which projects outwardly is provided integrally at a lower end of each side wall 71.
The arm portion 72 includes an upward and downward portion 75 extending downwardly from a rear end of the knob 70, and a horizontal portion 76 bent further from a lower end of the upward and downward portion 75 and extending rearwardly. At a rear end of the horizontal portion 76, a stopper protrusion 77 which forms a thicker portion and projects downwardly and a lever stopper 78 projecting upwardly are provided integrally.
The lever stopper 78 has a substantially pawl shape which is enlarged at an upper end portion thereof and is engaged with a locking hole 79 formed at an upper portion of the front wall 31 as shown in A of FIG. 15 to prevent pivotal motion of the popup lever 25 around the shaft member 51.

FIG. 14 is a sectional view of the popup stay 26, and A is a sectional view of the popup stay 26 taken along line 14A-14A of FIG. 10 and B is a sectional view of the popup stay 26 taken along line 14B-14B.

As shown in FIGS. 4 and 14, the popup stay 26 includes a pair of left and right side walls 80, and a bottom wall 81 connecting lower ends of the side walls 80 to each other. Outer flanges 82 bent outwardly in the leftward and rightward directions are provided at upper ends of the left and right side walls 80. The outer flanges 82 are formed so as to have a substantially channel shape as viewed in plan at the left and right sides and the rear side thereof, and are placed on a stepped portion 21b formed along a peripheral edge portion of the opening of the stay attaching recessed portion 53 of the lid 21 such that an upper face of the popup stay 26 and an upper face of the lid 21 lie in flush with each other.

The side walls 58 of the stay attaching recessed portion 53 and the side walls 80 of the popup stay 26, and the bottom portion 54 of the stay attaching recessed portion 53 and the bottom wall 81 of the stopper protrusion 77 of the popup stay 26, are provided individually in an opposing relationship to each other.

As shown in A of FIG. 14, the engaging projection 27 is formed integrally on the bottom wall 81 of the popup stay 26 and has an elongated elliptical shape. The engaging projection 27 is constricted at a base portion thereof adjacent the bottom wall 81. A rear portion of the bottom wall 81 forms a stopper arm portion 83 which extends rearwardly, and a rear portion of the stopper arm portion 83 is bent obliquely upwardly once and further has a stopper portion 83a formed from an enlarged portion of a substantially triangular shape.

As shown in B of FIG. 14, an attaching boss 56 projects integrally from the bottom wall 81, and a lightening hole 56a for allowing a screw 57, which is a tapping screw, to be fastened readily is formed at an axis portion of the attaching boss 56.
An elongated hole 84 for passing the shaft member 51 therethrough is provided in the side wall 80. The elongated hole 84 is provided in an obliquely upward inclination, and an upper end portion thereof coincides with the position of the through-hole 73 provided in the side wall 71 of the popup lever 25. The elongated hole 84 is provided for allowing downward movement of the popup lever 25 when the popup lever 25 is pushed down to pop up the same as hereinafter described.

Further, a guide groove 85 in and by which the guide shaft 74 is fitted and guided for movement is provided below the elongated hole 84 in the side wall 80. The guide groove 85 has an arcuate groove 85a and a lock groove 85b formed continuously to and integrally with each other. The arcuate groove 85a is formed along an arc which is drawn by the guide shaft 74 around the shaft member 51 when the shaft member 51 is positioned at the lower end of the elongated hole 84 and is provided obliquely such that the front side thereof is positioned higher. The arcuate groove 85a is bent at a rear end portion thereof and continues to the lock groove 85b. The lock groove 85b has a substantially linear shape and extends forwardly in an obliquely upward direction such that it is inclined substantially in parallel to the major axis of the elongated hole 84.

As shown in FIG. 11, the shaft member 51 is movable within the elongated hole 84, and if the knob 70 is pushed, then the shaft member 51 moves downwardly in the elongated holes 84. It is to be noted that the position at which the knob 70 is pushed is preferably within a range from an intermediate portion to a rear half portion side in the forward and backward direction from the necessity to push down the shaft member 51.
If the shaft member 51 reaches the lower end of the elongated holes 84, then the guide shaft 74 reaches the lower end of the lock grooves 85b and then enters the arcuate grooves 85a beyond bent portions 85c which are connecting portions between the arcuate grooves 85a and the lock grooves 85b.

In order to assemble the popup mechanism 50 and the latch mechanism, the popup lever 25 is assembled to the popup stay 26 as shown in FIG. 12. At this time, the guide shafts 74 are fitted into the guide grooves 85 and the popup mechanism 50 and the latch mechanism are connected to each other by the shaft member 51 with the elongated holes 84 and the through-holes 73 registered with each other. At this time, an arm 52a of each spring 52 is in elastic contact with the lower face of the knob 70 while the other arm 52b of the spring 52 is in elastic contact with the bottom wall 81 of the popup stay 26. A coiled portion 52c is wound around the shaft member 51.

Then, the popup stay 26 with which the popup lever 25 is integrated is placed into the stay attaching recessed portion 53, and the engaging projection 27 is threaded through the opening 55 provided in the bottom portion 54 and the bottom wall 81 of the popup stay 26 is placed on the bottom portion 54. Then, the bottom wall 81 is fastened to and integrated with the attaching bosses 56 of the popup stay 26 by the screws 57.

On the other hand, the latch 28 is attached to a bottom portion 90 of the latch recessed portion 29 provided on the body case 22 and is fitted in an attaching hole 91 of the bottom portion 90. A rear end portion of the bottom portion 90 forms a rear end edge portion 92.
The latch 28 is configured such that a locking hole 95 into which the engaging projection 27 is fitted is provided in an elastic member 94, at one end of which a flange portion 93 which is wider than the attaching hole 91 is provided, and the latch 28 is attached by pushing the elastic member 94 into the locking hole 95 in such a state that the elastic member 94 has a spring 96 around the periphery thereof to elastically deform the elastic member 94 and the spring 96. At this time, a rear portion of the flange portion 93 is swollen rearwardly from the rear end edge portion 92.

Now, opening and closing operations of the lid 21 are described. In order to open the lid 21, the popup lever 25 is first opened so as to be popped up (first action), and then the popup lever 25 is picked and pulled up to disengage the engaging projection 27 from the latch 28 to open the lid 21 around the hinge axis 24 (second action). In other words, two-stage actions are required. By requiring such two-stage actions, it is possible to prevent the lid 21 from being opened inadvertently only by a touch with the popup lever 25. Particularly since the forwardly open type is used, inadvertent opening during traveling can be prevented effectively.

Thus, the first action is described first. FIG. 15 illustrates operation of the popup mechanism 50. A of FIG. 15 illustrates a state before a popup operation in which the popup lever 25 lies down and the lid 21 is closed. At this stage, the shaft member 51 is positioned at an upper end portion of the elongated holes 84 and also the guide shafts 74 are positioned at an upper end portion of the lock grooves 85b, and a locked state is established.

In this state, while the knob 70 of the popup lever 25 is biased in the opening direction, since the guide shafts 74 are in the locking state, pivotal motion of the popup lever 25 is blocked. However, in this locking state, there is the possibility that, only if the knob 70 is pushed downwardly a little, the guide shafts 74 may move to the lower end of the lock grooves 85b to cancel the locking state readily.
Therefore, in the present embodiment, the lever stoppers 78 are engaged with the locking holes 79 to further block the pivotal motion of the popup lever 25, and the locking cannot be canceled unless the knob 70 is pushed down with a definite will by a stroke sufficient to allow the lever stoppers 78 to come out of the locking holes 79. Consequently, the locking state can be maintained with certainty.

B of FIG. 15 illustrates a state wherein the knob 70 is pushed down for the popup, and the popup lever 25 moves down to the lower end portion of the elongated holes 84 with the shaft member 51 thereof guided by the elongated holes 84. Consequently, the guide shafts 74 move to the lower end of the lock grooves 85b and simultaneously the lever stoppers 78 come out of the locking holes 79. Therefore, the guide shafts 74 enter the arcuate grooves 85a over the bent portions 85c to cancel the locking.

C of FIG. 15 illustrates a popup state, and the guide shafts 74 entering the arcuate grooves 85a are released from the engagement of the lever stoppers 78. Since the knob 70 is biased in the opening direction by the springs 52, it is pivoted in the opening direction around the shaft member 51 under the guidance of the arcuate grooves 85a.
When the guide shaft 74 moves to the upper end side of the arcuate grooves 85a and the stopper protrusion 77 of the popup lever 25 is brought into abutment with the rear end portion of the flange portion 93, then the popup lever 25 is disabled from pivotal motion. Therefore, the opening angle of the popup lever 25 is locked at the predetermined angle. Although the opening angle of the popup lever 25 can be adjusted suitably, it is possible to set the distance D between the popup lever 25 and a front end portion of the outer flanges 82 on the rear portion side, for example, to an approximately two-finger dimension so that an article may not be sandwiched readily upon popup.

In this manner, by pushing the popup lever 25 by an operation of the first stage to uprightly pivot the popup lever 25 by means of the popup mechanism 50 so as to be capable of being grasped to establish a popup state and then gripping, by an operation of the second stage, the popup lever 25 popped up so as to be capable of being gripped and pulling up the popup lever 25 by a predetermined pulling up load, the engagement between the engaging projection 27 and the latch 28 can be canceled to open the lid 21. Therefore, since the lid 21 cannot be opened with certainty without following the determined procedure by two-stage operations, even if the tank pocket 20 serving as a utility box is provided at a place at which the driver can touch readily with the tank pocket 20 by providing the tank pocket 20 on the fuel tank 10, it is possible to prevent the lid 21 from being opened by an inadvertent touch or the like. Therefore, the reliability regarding opening and closing the lid 21 can be raised.

Further, since the pivoting mechanism for the popup lever 25 is formed from the popup mechanism 50 such that the popup lever 25 is pushed down by a predetermined amount to move the guide shafts 74, which are in the lock grooves 85b but are not in a locked state, into the arcuate grooves 85a to cancel the locking to pop up the popup lever 25, unless the popup lever 25 is popped up, the popup lever 25 remains in a lying down state and does not rise from the surface of the lid 21 but is substantially in flush with the surface of the lid 21. Therefore, a portion to be gripped does not exist. Consequently, the possibility that the popup lever 25 may be gripped to open the lid 21 inadvertently is eliminated.

In addition, in order to pop up the popup lever 25, it is necessary to push preferably a rear half portion of the knob 70 to push down the popup lever 25 by a predetermined amount, but the popup movement does not occur by pushing down by less than the predetermined amount as upon a light touch with the knob 70, and inadvertent popup can be prevented likewise.

Further, if the popup lever 25 is popped up, then although it is possible to grip the popup lever 25 and pull up the popup lever 25 by more than the predetermined pulling up load to open the lid, since, when the pulling up load is less than the predetermined amount, the engagement of the engaging mechanism cannot be canceled, inadvertent opening of the lid can be prevented likewise. Besides, since a plurality of blocking portions against upright pivotal motion of the popup lever 25 are provided by provision of the lever stopper 78 in addition to the popup mechanism 50, inadvertent popup can be blocked with a higher degree of certainty, and the reliability in regard to opening and closing of the lid 21 can be enhanced further. The number of such blocking portions is arbitrary only if it is a plural number.

Furthermore, since the tank pocket 20 is provided on the fuel tank 10, although the number of opportunities of an inadvertent touch with the popup lever 25 increases, since the reliability in regard to the opening and closing of the lid 21 is high, the structure is suitable for the tank pocket 20. Further, since the driver seated on the seat which is positioned rearwardly of the fuel tank 10 can open and close the lid 21 readily while it remains seated on the seat, various articles such as small change and documents can be placed into and out of the tank pocket 20, which improves the convenience.

It is to be noted that the invention of the present application is not limited to the embodiment described above but can be modified.
For example, the saddle vehicle may be not only a motorcycle but also a vehicle having three or more wheels. The utility box may be not only a tank pocket provided for specification change of an airbag but any of various accommodation members having various shapes and dimensions independent of an airbag.

## Claims

1. A structure of a utility box for a saddle vehicle which is provided on a saddle vehicle wherein a fuel tank (10) is supported on a main frame (4) extending rearwardly from a head pipe (3) and an engine (8) is disposed below said main frame (4), said structure of a utility box being **characterized in that** :
a recessed portion (12) which is recessed downwardly is provided on an upper face of said fuel tank (10) and said utility box (20) is disposed in said recessed portion (12);
said utility box (20) includes a body case (22) open upwardly for accommodating an article therein, a lid (21) attached for upward pivotal motion for opening and closing the opening (15) of said body case (22), and opening and closing blocking means for blocking the opening and closing of said lid (21);
said opening and closing blocking means includes a lever pivoting mechanism (25, 26) for pivoting a lever (25), which is attached for pivotal motion to said lid (21) and serves as a gripping portion when said lid (21) is to be opened, upwardly and downwardly, and an engaging mechanism (27, 28) for engaging said lid (21) with said body case (22) and canceling the engagement when said lid (21) is pulled up by a predetermined pulling up load; and
said opening and closing blocking means is operated at two stages such that, as the first stage operation, said lever (25) is pushed to pivot said lever (25) to be erected uprightly through said lever pivoting mechanism (25, 26) such that said lever (25) can be gripped, and
as the second stage operation, said lever (25) erected uprightly is gripped and pulled up by a predetermined pulling up load to cancel the engagement of said engaging mechanism (27, 28) to permit said lid (21) to be opened.

2. The structure of a utility box for a saddle vehicle according to claim 1, **characterized in that** said lever pivoting mechanism includes spring means for elastically biasing said lever in the erecting direction, and said popup mechanism pivots said lever uprightly by said spring means by pushing down said lever by a predetermined amount so as to pop up said lever.

3. The structure of a utility box for a saddle vehicle according to claim 1 or 2, **characterized in that** said lever pivoting mechanism includes a plurality of blocking portions for permitting erecting pivotal motion of said lever by pushing down said lever by the predetermined amount.

4. The structure of a utility box for a saddle vehicle according to any one of claims 1 to 3, **characterized in that** a gap in the form of a groove (85) of an inverted V shape directed uprightly at a joining portion between said lid (21) and a member on said fuel tank (10) side which surrounds said lid (21) when said lid (21) is closed is provided and a rib (61, 62, 63) which projects downwardly is provided on a lower face of said lid (21) along said joining portion, and another rib (61, 62, 63) which projects upwardly from said body case (22) side is disposed in such a manner as to overlap with said rib (61, 62, 63) with a gap left therebetween such that a labyrinth structure is formed from the ribs.

5. The structure of a utility box for a saddle vehicle according to claim 4, **characterized in that**, as the rib (61, 62, 63) which projects from said lid (21) side or said body case (22) side, a plurality of ribs (61, 62, 63) are provided on the inner and outer sides, and the inner and outer ribs have different heights from each other such that the outer rib adjacent said joining portion has a greater height.

## Patentansprüche

1. Struktur eines Aufbewahrungskastens für ein Sattelfahrzeug, der auf einem Sattelfahrzeug bereitgestellt ist, wobei ein Brennstofftank (10) auf einem Hauptrahmen (4), der sich von einem Kopfrohr (3) nach hinten erstreckt, gehalten wird und ein Motor (8) unter dem Hauptrahmen (4) angeordnet ist, wobei die Struktur eines Aufbewahrungskastens **dadurch gekennzeichnet ist, dass**:
ein vertiefter Abschnitt (12), der nach unten vertieft ist, auf einer Oberseite des Brennstoffbehälters (10) bereitgestellt ist und der Aufbewahrungskasten (20) in dem vertieften Abschnitt (12) angeordnet ist;
wobei der Aufbewahrungskasten (20) ein Hauptteilgehäuse (22), das nach oben offen ist, um einen Artikel darin aufzunehmen, einen Deckel (21), der für eine Aufwärtsschwenkbewegung zum Öffnen und Schließen der Öffnung (15) des Hauptteilgehäuses (22) angebracht ist, und eine Öffnungs- und Schließsperreinrichtung zum Sperren des Öffnens und Schließens des Deckels (21) hat;
wobei die Öffnungs- und Schließsperreinrichtung einen Hebelschwenkmechanismus (25, 26) zum Schwenken eines Hebels (25), der für die Schwenkbewegung an dem Deckel (21) angebracht ist und als ein Greifabschnitt dient, wenn der Deckel (21) aufwärts und abwärts geöffnet werden soll, und einen Eingreifmechanismus (27, 28) zum In-Eingriff-Bringen des Deckels (21) mit dem Hauptteilgehäuse (22) und zum Lösen des Eingriffs, wenn der Deckel (21) durch eine vorgegebene Hochziehkraft hoch gezogen wird, umfasst; und
wobei die Öffnungs- und Schließsperreinrichtung in zwei Stufen betätigt wird, so dass der Hebel (25) als die Betätigung der ersten Stufe gedrückt wird, um den Hebel (25) zu schwenken, so dass er durch den Hebelschwenkmechanismus (25, 26) derart aufrecht aufgerichtet wird, dass der Hebel (25) gegriffen werden kann, und der aufrecht aufgerichtete Hebel (25) als die Betätigung der zweiten Stufe gegriffen wird und mit einer vorgegebenen Hochziehkraft hoch gezogen wird, um den Eingriff des Eingreifmechanismus (27, 28) zu lösen, um zuzulassen, dass der Deckel (21) geöffnet wird.

2. Struktur eines Aufbewahrungskastens für ein Sattelfahrzeug nach Anspruch 1, **dadurch gekennzeichnet, dass** der Hebelschwenkmechanismus eine Federeinrichtung zum elastischen Vorspannen des Hebels in der Aufrichtungsrichtung umfasst, und ein Ausklappmechanismus den Hebel durch die Federeinrichtung aufrecht schwenkt, indem er den Hebel um einen vorgegebenen Betrag nach unten drückt, um den Hebel auszuklappen.

3. Struktur eines Aufbewahrungskastens für ein Sattelfahrzeug nach Anspruch 1 oder 2, **dadurch gekennzeichnet, dass** der Hebelschwenkmechanismus mehrere Sperrabschnitte umfasst, um die Aufrichtschwenkbewegung des Hebels durch das Herunterdrücken des Hebels um den vorgegebenen Betrag zuzulassen.

4. Struktur eines Aufbewahrungskastens für ein Sattelfahrzeug nach einem der Ansprüche 1 bis 3, **dadurch gekennzeichnet, dass** ein Spalt in der Form einer Rille (85) mit einer aufrecht ausgerichteten umgekehrten V-Form an einem Verbindungsabschnitt zwischen dem Deckel (21) und einem Element auf der Seite des Brennstofftanks (10), die den Deckel (21) umgibt, wenn der Deckel (21) geschlossen ist, bereitgestellt ist, und eine Rippe (61, 62, 63), die nach unten vorsteht, auf einer Unterseite des Deckels (21) entlang des Verbindungsabschnitts bereitgestellt ist, und eine andere Rippe (61, 62, 63), die von der Seite des Hauptteilgehäuses (22) nach oben vorsteht, in einer derartigen Weise angeordnet ist, dass sie mit der Rippe (61, 62, 63) überlappt, wobei ein Spalt zwischen ihnen bleibt, so dass aus den Rippen eine Labyrinthstruktur gebildet wird.

5. Struktur eines Aufbewahrungskastens für ein Sattelfahrzeug nach Anspruch 4, **dadurch gekennzeichnet, dass** als die Rippe (61, 62, 63), die von der Seite des Deckels (21) oder der Seite des Hauptteilgehäuses (22) vorsteht, mehrere Rippen (61, 62, 63) auf den Innen- und Außenseiten bereitgestellt sind, und die Innen- und Außenrippen zueinander verschiedene Höhen haben, so dass die Außenrippe benachbart zu dem Verbindungsabschnitt eine größere Höhe hat.

## Revendications

1. Structure d'une boîte utilitaire pour un véhicule à selle qui est prévue sur un véhicule à selle dans lequel un réservoir à carburant (10) est supporté sur un cadre principal (4), s'étendant en arrière depuis un tube de direction (3), et un moteur (8) est disposé au-dessous dudit cadre principal (4), ladite structure d'une boîte utilitaire étant **caractérisée en ce que** :
une portion évidée (12) qui est évidée vers le bas est prévue sur une face supérieure dudit réservoir à carburant (10) et ladite boîte utilitaire (20) est disposée dans ladite portion évidée (12) ;
ladite boîte utilitaire (20) comprend un boîtier formant corps (22) ouvert vers le haut pour loger un article à l'intérieur, un couvercle (21) fixé pour un mouvement de pivot vers le haut pour ouvrir et fermer l'ouverture (15) dudit boîtier formant corps (22), et des moyens de blocage d'ouverture et de fermeture pour bloquer l'ouverture et la fermeture dudit couvercle (21) ;
lesdits moyens de blocage d'ouverture et de fermeture comprennent un mécanisme de pivotement du levier (25, 26) pour faire pivoter un levier (25) qui est fixé pour un mouvement de pivot audit couvercle (21) et sert de portion de prise lorsque ledit couvercle (21) doit être ouvert, vers le haut et vers le bas, et un mécanisme d'engagement (27, 28) pour engager ledit couvercle (21) avec ledit boîtier formant corps (22) et annuler l'engagement lorsque ledit couvercle (21) est tiré vers le haut par une charge de traction vers le haut prédéterminée ; et
lesdits moyens de blocage d'ouverture et de fermeture sont actionnés à deux niveaux de telle sorte que, comme actionnement de premier niveau, ledit levier (25) est poussé pour faire pivoter ledit levier (25), pour être dressé vers le haut au moyen dudit mécanisme de pivotement du levier (25, 26), de telle sorte que ledit levier (25) peut être saisi,
et comme actionnement de deuxième niveau, ledit levier (25) dressé vers le haut est saisi et tiré vers le haut par une charge prédéterminée de traction vers le haut pour annuler l'engagement dudit mécanisme d'engagement (27, 28) pour permettre audit couvercle (21) d'être ouvert.

2. Structure d'une boîte utilitaire pour un véhicule à selle selon la revendication 1, **caractérisée en ce que** ledit mécanisme de pivotement du levier comprend des moyens formant ressort pour solliciter de façon élastique ledit levier dans le sens d'érection, et ledit mécanisme inclinable fait pivoter ledit levier vers le haut par lesdits moyens formant ressort en poussant vers le bas ledit levier d'une valeur prédéterminée de manière à faire incliner ledit levier.

3. Structure d'une boîte utilitaire pour un véhicule à selle selon la revendication 1 ou 2, **caractérisée en ce que** ledit mécanisme de pivotement du levier comprend une pluralité de portions de blocage pour permettre le mouvement de pivot d'érection dudit levier en poussant vers le bas ledit levier d'une valeur prédéterminée.

4. Structure d'une boîte utilitaire pour un véhicule à selle selon l'une quelconque des revendications 1 à 3, **caractérisée en ce qu'**un espace en forme de rainure (85) de forme en V inversé orienté vers le haut au niveau d'une portion de jonction entre ledit couvercle (21) et un élément sur le côté dudit réservoir à carburant (10) qui entoure ledit couvercle (21) lorsque ledit couvercle (21) est fermé est prévu et une nervure (61, 62, 63) qui fait saillie vers le bas est prévue sur une face inférieure dudit couvercle (21) le long de ladite portion de jonction, et une autre nervure (61, 62, 63) qui fait saillie vers le haut depuis le côté dudit boîtier formant corps (22) est disposée de manière à chevaucher ladite nervure (61, 62, 63) avec un espace laissé entre les deux de sorte qu'une structure labyrinthe est formée à partir des nervures.

5. Structure d'une boîte utilitaire pour un véhicule à selle selon la revendication 4, **caractérisée en ce que**, comme la nervure (61, 62, 63) qui fait saillie depuis le côté dudit couvercle (21) ou le côté dudit boîtier formant corps (22), une pluralité de nervures (61, 62, 63) sont prévues sur les côtés internes et externes, et les nervures internes et externes ont des hauteurs différentes l'une de l'autre de sorte que la nervure extérieure adjacente à ladite portion de jonction a une hauteur supérieure.
